# EUROPÄISCHE PATENTSCHRIFT

(11) **EP 2 135 792 B1**
(45) Veröffentlichungstag und Bekanntmachung des Hinweises auf die Patenterteilung: **06.04.2016**
(21) Anmeldenummer: 09159614.8
(22) Anmeldetag: 07.05.2009
(51) Int. Cl.: B62B 3/06

(54) **Transportgerät und Transportvorrichtung**
Transport device
Appareil de transport et dispositif de transport

(30) Priorität: 19.06.2008 DE 102008002543
(43) Veröffentlichungstag der Anmeldung: 23.12.2009
(73) Patentinhaber: Robert Bosch GmbH, 70442 Stuttgart (DE)
(72) Erfinder: Mattke, Hubert, 31079, Sibbesse (DE)

(56) Entgegenhaltungen:
- WO-A1-02/100760
- WO-A1-2006/078156
- DE-A1- 19 958 086
- DE-U1- 20 313 955

## Beschreibung

### Stand der Technik

Die Erfindung geht von einem Transportgerät und einer Transportervorrichtung nach der Gattung der unabhängigen Patentansprüche aus.

Aus beispielsweise DE 195 08 581 B4 und US 6 601 825 B2 sind Transportgeräte bekannt, die ein Fahrgestell zur Verschiebung des Transportgeräts auf einer Unterlage und ein heb- und senkbares Tragorgan zur Aufnahme eines Transportguts aufweisen. Das Tragorgan umfasst dabei eine Gabel mit zwei Gabelscheiden, auf denen das Transportgut, im Falle der DE 195 08 581 B4 in Gestalt von Bobinen, im Falle der US 6 601 825 B2 in Gestalt von Paketen oder anderen Transportgütern, reibschlüssig gehalten wird.

Die WO 02/100760 A1 zeigt ein Transportgerät umfassend ein Fahrgestell mit einem Chassis zur Verschiebung des Transportgeräts auf einer Unterlage, insbesondere einem Boden,und ein heb- und senkbares Tragorgan, wobei am Tragorgan angeordnete Verschiebemittel zur Verschiebung eines vom Tragorgan aufgenommenen Transportguts relativ zum Tragorgan vorgesehen sind und das Tragorgan mittels einer Hubvorrichtung heb- und senkbar ausgebildet ist.

Ein Transportroller ist aus der DE 203 13 955 U1 bekannt.

### Aufgabe und Lösung

Der Erfindung liegt die Aufgabe zugrunde, die bei einem gattungsgemäßen Transportgerät eine erleichterte Verschiebung eines von dem Tragorgan gehaltenen Transportguts zu ermöglichen.

Diese Aufgabe wird durch die in Anspruch 1 angegebenen Merkmale gelöst. Hierbei ist erfindungsgemäß vorgesehen, dass die Hubvorrichtung als Hebelgetriebe ausgebildet ist. Dabei ist vorgesehen, dass das Hebelgetriebe einen Betätigungshebel umfasst, der in einem ersten Gelenk an einem mit dem Chassis starr verbundenen Schiebegriff gelagert ist, wobei an einem unteren Ende des Betätigungshebels eine Schubstange in einem zweiten Gelenk gelenkig befestigt ist, wobei die Schubstange an ihrem dem Betätigungshebel abgewandten Ende mit einem Tragorgankörper mittels zweimal zwei sowohl mit dem Tragorgan in einem vierten Gelenk als auch mit dem Chassis in einem fünften Gelenk gelenkig verbundene Hebelstangen gegen das Chassis abgestützt ist, wobei jeweils zwei Hebelstangen an jeder Seite des Tragorgankörpers angeordnet sind.

Es ist vorgeschlagen, dass das Tragorgan Verschiebemittel aufweist, welche eine Verschiebung des Transportguts relativ zum Tragorgan ermöglichen.

Die Verschiebemittel können vorteilhaft frei drehbare Rollen sein, wobei die Drehrichtung in einer Ebene festgelegt sein kann oder bei Verwendung von selbstlenkenden Rollen eine Verschiebung in beliebiger Richtung parallel zur Unterlage möglich ist.

Vorteilhaft sind die Verschiebemittel für einen Transportvorgang außer Betrieb setzbar, so dass eine sichere Lagerung des Transportguts auf dem Transportgerät während des Transportvorgangs gegeben ist und ein Abrutschen des Transportguts vom Transportgerät sicher verhindert wird. Vorteilhaft kann die Außerbetriebsetzung bei Realisierung der Verschiebemittel als Rollen beispielsweise dadurch erreicht werden, dass diese unter eine Ladekante, etwa die Oberkante des Chassis bzw. Fahrgestell des Transportgeräts, die dann als Auflager für das Transportgut dient, absenkbar sind. Alternativ können die Rollen auch blockierbar sein, beispielsweise dadurch, dass die Rollen, auf denen das Transportgut lagert, auf ein Auflager abgesenkt und somit reibschlüssig mit diesem verbunden sind.

Vorteilhaft kann das Transportgerät als Teil einer Transportvorrichtung verwendet werden, welche neben dem Transportgerät einen auf der Unterlage verschiebbaren oder verfahrbaren Transportroller mit einer Ladefläche zur Aufnahme des Transportguts aufweist, wobei die Ladefläche eine Ausnehmung aufweist, durch die hindurch das Tragorgan des Transportgeräts das Ladegut aufnehmen kann.

Vorteilhaft dabei kann das Transportgerät dabei beim Verfahren auf der Unterlage zum gleichzeitigen Manövrieren des Transportrollers verwendet werden.

### Zeichnungen

Ausführungsbeispiele der Erfindung sind in den Figuren dargestellt und werden nachfolgend näher erläutert. Gleiche Bezugszeichen bezeichnen dabei gleiche oder gleichwirkende Elemente.

Es zeigen
Figur 1 eine schematische Darstellung eines erfindungsgemäßen Transportgeräts 1 mit dessen erfindungswesentlichen Elementen
Figuren 2, 3 und 4 das Zusammenwirken des erfindungsgemäßen Transportgeräts 1 mit einem Rollwagen 51, nachfolgend auch "Lastenroller", von dem ein Transportgut 50 auf eine Palette verladen wird.

### Beschreibung der Ausführungsbeispiele

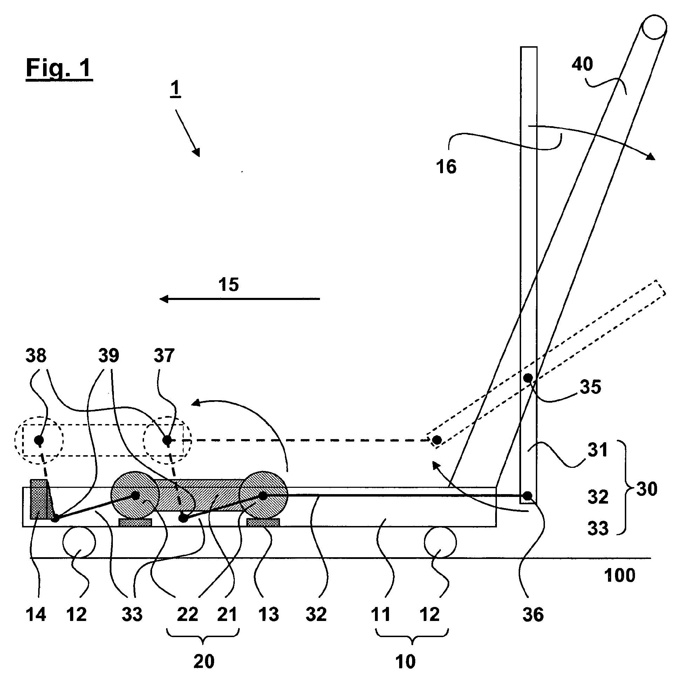

Die Funktionsweise des erfindungsgemäßen Transportgeräts wird nachfolgend anhand Figur 1 erläutert.

Das Transportgeräts 1 weist ein Fahrgestell 10 zur Verschiebung bzw. zum Verfahren des Transportgeräts 1 auf einer Unterlage 100, insbesondere einem Hallenboden einer Werkhalle, entlang der Pfeilrichtung 15 auf. Das Fahrgestell 10 verfügt dazu in an sich bekannter Weise über Laufräder 12, die an einem Chassis 11 angeordnet sind. Bei dem in der Figur dargestellten Beispiel eines erfindungsgemäßen Transportgeräts 1 handelt es sich um eine Version als Handwagen, der also von einem Bediener geschoben wird. Zur Erleichterung des Manövrierens des Transportgeräts weist dieses einen mit dem Chassis 11 starr verbundenen Schiebegriff 40 auf. Alternativ wäre auch ein selbstfahrendes Transportgerät 1 mit beispielsweise elektromotorischem Antrieb und beispielsweise Fernsteuerung denkbar. Im Falle des hier dargestellten handbetriebenen Transportgeräts 1 handelt es sich bei den Laufrädern 12 bevorzugt um an der dem Schubgriff zugewandten Achse selbstlenkende Rollen, wie diese beispielsweise von Einkaufswagen oder Schreibtischstühlen bekannt sind, im Falle der in Fahrrichtung (Pfeilrichtung 15) vorderen Achse um nur in Fahrrichtung drehende Rollen.

Das Transportgerät 1 weist weiterhin ein Tragorgan 20 auf. Das Tragorgan 20 dient in einer ersten Fassung der Aufnahme und Lagerung eines Transportguts 50 während eines Transportvorgangs. Das Tragorgan dient weiterhin dem Entladen des Transportgeräts 1 nach dem Transport. Das Tragorgan 20 umfasst einen Körper 21 und daran angeordnete Rollen 22, die über die Oberkante des Körpers 21 hinausragen und zumindest um eine Achse frei drehbar gelagert sind.

Das gesamte Tragorgan 20 ist mittels einer Hubvorrichtung 30 heb- und senkbar und somit gegenüber dem Chassis 11 respektive dem Fahrgestell 10 und damit auch der Unterlage 100 in der Höhe verstellbar. Die Hubvorrichtung 30 ist im Fall der Figur 1 als Hebelgetriebe ausgebildet. Dieses Hebelgetriebe umfasst einen Betätigungshebel 31, der in einem Gelenk 35 am Schubgriff 40 gelagert und somit entlang einer zweiten Pfeilrichtung 16 gegenüber dem Schubgriff 40 verschwenkbar ist. Am unteren Ende des Betätigungshebels 31 ist eine Schubstange 32 in einem zweiten Gelenk 36 gelenkig befestigt, die an ihrem dem Betätigungshebel 31 abgewandten Ende mit dem Körper 21 des Tragorgans 20 in einem dritten Gelenk 37 gelenkig verbunden ist. Das Tragorgan 20 bzw. dessen Körper 21 ist mittels zwei mal zwei (jeweils zwei pro Seite) sowohl mit dem Tragorgan 20 in vierten Gelenken 38 als auch dem Chassis 11 in fünften Gelenken 39 gelenkig verbundenen Hebelstangen 33 gegen das Chassis 11 abgestützt.

Dieses durch Betätigungshebel 31, Schubstange 32, Körper 21 des Tragorgans 20 und Hebelstangen 33 in Verbindung mit den Gelenken 35, 36, 37, 38 und 39 gebildete Hebelgetriebe bewirkt bei Verschwenken des Betätigungshebels 31 entlang zweiter Pfeilrichtung 16 ein Anheben des Tragorgans 20 aus dessen Ruhestellung, der Transportstellung, die in der Figur 1 ausgezogen und schraffiert dargestellt ist, in eine Entladestellung, die in der Figur 1 mit gestrichelten Linien dargestellt ist.

Zur Arretierung in der Entladestellung ist ein Anschlag 14 mit dem Chassis 11 verbunden, der ein Widerlager für die Hebelstangen 33 bildet, an das die Hebelstangen bei Betätigung des Betätigungshebels 31 entlang Pfeilrichtung 16 anlaufen. Der Anschlag 14 ist dabei so angeordnet, dass die Hebelstangen 33 erst nach einer Verkippung über eine senkrechte Stellung hinaus anlaufen. Da das Tragorgan 20 in dieser End- bzw. Entladestellung bereits seinen oberen Totpunkt durchlaufen hat und weiterhin auch das dem Bediener zugewandte Ende des Betätigungshebels 31 länger als das der Schubstange 32 zugewandte Ende ist, befindet sich das Tragorgan 20 in der gestrichelt eingezeichneten Entladestellung somit in einem stabilen Gleichgewicht auch ohne weitere Manipulation des Betätigungshebels 31 durch den Bediener, so dass dieser seine Aufmerksamkeit gänzlich dem Entladevorgang zuwenden kann.

In der Transportstellung des Tragorgans 20 liegen die Laufflächen von dessen Rollen 22 auf Lagern 13 auf. Diese bewirken zum einen eine Entlastung der Hubvorrichtung 30, während ein Transportgut 50 auf der Hubvorrichtung 20 aufliegt und durch Verschieben des Transportgeräts 1 transportiert wird. Diese bewirken weiterhin eine Blockierung der Verschiebemittel 22 des Tragorgans 20 während eines Transportsvorgangs durch Reibschluss und verhindern damit ein ungewolltes Verrutschen oder gar Abrutschen des Transportguts vom Tragorgan 20.

Es versteht sich, dass die Hubvorrichtung 30 nicht zwingend als Hebelgetriebe ausgeführt sein muss. Vielmehr sind auch anderweitige Lösung, wie beispielsweise ein hydraulischer oder pneumatischer, alternativ beispielsweise ein elektromotorischer Kettenantrieb oder dergleichen denkbar. Das beschriebene Hebelgetriebe stellt ohne Beschränkung der Erfindung lediglich ein mögliches Beispiel dar.

Es versteht sich weiterhin, dass auch die Arretierung bzw. das Außerfunktionsetzen der Verschiebemittel 22, im beschriebenen Beispiel der Rollen 22 des Tragorgans, auch anderweit realisiert werden kann. In einfacher Abwandlung kann beispielsweise das Chassis 11 als Auflager für ein Transportgut dienen, wobei die Verschiebemittel 22 in Transportstellung des Tragorgans 20 unterhalb der Oberkante des Chassis liegen und somit nicht mit dem Transportgut in Kontakt stehen. Weitere alternative Ansätze sind denkbar und liegen im Bereich der Erfindung.

Das beschriebene Transportgerät 1 kann ohne weiteres Zubehör bereits bestimmungsgemäß zum Transport und Verladen von Transportgütern, insbesondere von Kisten oder Paketen und dergleichen verwendet werden. Dazu wird das Transportgut, beispielsweise von einem Band oder mittels eines Krans oder auch durch eine oder mehrere Personen von Hand auf das Transportgerät 1 geladen. Zur Verladung von einem Band auf das Transportgerät 1 können vorteilhaft die Verschiebemittel 22 des Transportgerät 1 genutzt werden. Dazu wird das Transportgerät 1 vor das Bandende gefahren und die Arretierung der Verschiebemittel 22 gelöst, im Falle des Beispiels gemäß Figur 1 durch Anheben des Tragorgans 20 mittels der Hubvorrichtung 30. Das Transportgut kann nun vom Bandende mittels der Verschiebemittel 22 auf das Transportgerät 1 verschoben und verladen werden. Anschließend werden die Verschiebemittel 22 blockiert, im beschriebenen Beispiel durch Absenken des Tragorgans 20 und damit Aufliegen der Verschiebemittel 22 auf den Lagern 13. Sodann kann das Transportgut mit dem Transportgerät 1 transportiert werden.

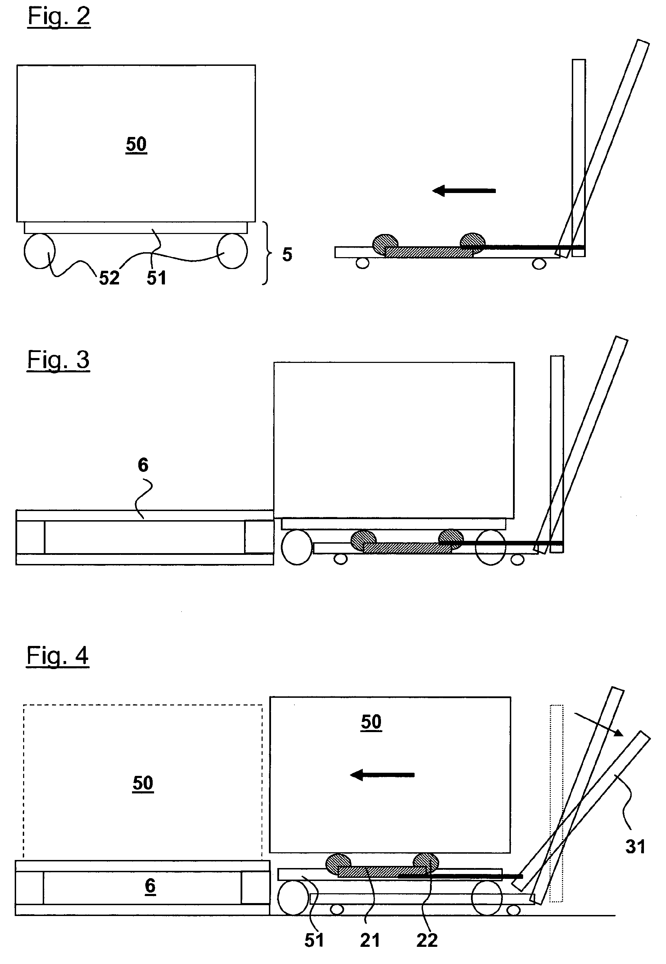

Zum Verladen des Transportguts 50 beispielsweise auf eine Palette oder wiederum ein Transportband oder dergleichen wird das Transportgerät 1 vor das Band oder die Palette 60 manövriert (Figur 4). Durch Verschwenken des Betätigungshebels 31 entlang der Pfeilrichtung wird das Tragorgan 20 angehoben und damit die Verschiebemittel 22 freigegeben bzw. wirksam. Das Transportgut 50 kann nun vom Transportgerät 1 respektive dem Tragorgan 20 mittels der Verschiebemittel 22 auf das Band oder wie in Figur 4 auf die Palette verschoben werden.

In den Figuren 2 bis 4 ist das Zusammenwirken des vorbeschriebenen Transportgeräts mit einem Transportroller 5 dargestellt.

Der Transportroller 5 weist eine Ladefläche 51 zur Aufnahme des Transportguts 50 auf. Zum Zusammenwirken mit dem Transportgerät 1 ist die Ladefläche mit einer Ausnehmung versehen. Diese Ausnehmung dient als Öffnung für das Tragorgan 20 des Transportgeräts 1.

In Figur 2 ist der Transportroller 5 mit Ladegut 50 sowie das Transportgerät 1 mit Tragorgan 20 Transportstellung dargestellt. Das Transportgerät 1 wird entlang der Pfeilrichtung geschoben, so dass das Chassis 11 mit Tragorgan 20 zwischen den Laufrädern und unter der Ladefläche 51 des 52 des Transportrollers 5 zu stehen kommt. Das Ergebnis ist in Figur 3 dargestellt.

Durch Verschieben des Transportgeräts 1 wird mittelbar auch der Transportroller 5 verschoben und so das Transportgut 50 zu einem Bestimmungsort, hier einer Palette 6 verfahren.

Darauf (Figur 4) wird die Hubvorrichtung 30 durch Verschwenken des Bestätigungshebels 31 betätigt, somit das Tragorgan 20 auf das Niveau der Palettenoberkante angehoben, wobei das Transportgut 50 von den Verschiebemitteln, also beispielsweise Rollen 22, von der Ladefläche 51 des Transportrollers 5 abgehoben wird. Das nun auf den Rollen 22 lagernde Transportgut 50 wird anschließend entlang der Pfeilrichtung vom Bediener auf die Palette 6 verschoben und ist damit an seinem Bestimmungsort angekommen.

Um das Transportgut 50 von der Ladefläche 51 des Transportrollers 5 aufnehmen zu können, ist vorgesehen, dass die Transportfläche 51 eine Ausnehmung aufweist, durch die das Tragorgan 20 hindurchtauchen kann, so dass dessen Rollen 22 in Kontakt mit der Unterseite des Transportguts 50 kommen können.

## Patentansprüche

1. Transportgerät (1) umfassend ein Fahrgestell (10) mit einem Chassis (11) zur Verschiebung des Transportgeräts (1) auf einer Unterlage (100), insbesondere einem Boden,und ein heb- und senkbares Tragorgan (20), wobei am Tragorgan (20) angeordnete Verschiebemittel (22) zur Verschiebung eines vom Tragorgan (20) aufgenommenen Transportguts (50) relativ zum Tragorgan (20) vorgesehen sind und das Tragorgan (20) mittels einer Hubvorrichtung (30) heb- und senkbar ausgebildet ist, **dadurch gekennzeichnet, dass** die Hubvorrichtung (30) als Hebelgetriebe ausgebildet ist, wobei das Hebelgetriebe einen Betätigungshebel (31) umfasst, der in einem ersten Gelenk (35) an einem mit dem Chassis (11) starr verbundenen Schiebegriff (40) gelagert ist, wobei an einem unteren Ende des Betätigungshebels (31) eine Schubstange (32) in einem zweiten Gelenk (36) gelenkig befestigt ist, wobei die Schubstange (32) an ihrem dem Betätigungshebel (31) abgewandten Ende mit einem Tragorgankörper (21) mittels zweimal zwei sowohl mit dem Tragorgan (20) in einem vierten Gelenk (38) als auch mit dem Chassis (11) in einem fünften Gelenk (39) gelenkig verbundene Hebelstangen (33) gegen das Chassis (11) abgestützt ist, wobei jeweils zwei Hebelstangen (33) an jeder Seite des Tragorgankörpers (21) angeordnet sind.

2. Transportgerät nach Anspruch 1, **dadurch gekennzeichnet, dass** ein Anschlag (14) mit dem Chassis (11) verbunden ist, der ein Widerlager für die Hebelstangen (33) bildet, an das die Hebelstangen (33) bei Betätigung des Betätigungshebels (31) anlaufen.

3. Transportgerät nach einem der Ansprüche 1 oder 2, **dadurch gekennzeichnet, dass** die Verschiebemittel (22) in einer Transportstellung außer Funktion setzbar sind, so dass ein Transportgut (50) während eines Transportvorgangs auf dem Transportgerät (1) arretiert ist.

4. Transportvorrichtung mit einem Transportgerät (1) nach einem der Ansprüche 1 bis 3, ferner umfassend einen verschiebbaren Transportroller (5) welcher zur Aufnahme des Transportguts (50) eine Ladefläche (51) aufweist, welche Ladefläche (51) eine Ausnehmung aufweist, durch die hindurch das Tragorgan (20) des Transportgeräts (1) das Ladegut (50) aufnehmen kann.

## Claims

1. Transport appliance (1) comprising a carriage (10) with a chassis (11) for displacing the transport appliance (1) on a base (100), in particular a floor, and a raisable and lowerable support member (20), wherein displacement means (22), arranged on the support member (20), for displacing a transported material (50) received on the support member (20) relative to the support member (20) are provided and the support member (20) is configured to be raisable and lowerable by means of a lifting device (30), **characterized in that** the lifting device (30) is configured as a lever mechanism, wherein the lever mechanism comprises an actuating lever (31) which is mounted at a first articulation (35) on a sliding handle (40) rigidly connected to the chassis (11), wherein a push rod (32) is fastened in an articulated manner at a second articulation (36) at a lower end of the actuating lever (31), wherein the push rod (32) is supported with respect to the chassis (11) at its end remote from the actuating lever (31) with a support member body (21) by means of two times two lever rods (33) that are connected in an articulated manner both to the support member (20) at a fourth articulation (38) and to the chassis (11) at a fifth articulation (39), wherein in each case two lever rods (33) are arranged on each side of the support member body (21).

2. Transport appliance according to Claim 1, **characterized in that** a stop (14) is connected to the chassis (11), said stop forming an abutment for the lever rods (33) against which the lever rods (33) run when the actuating lever (31) is actuated.

3. Transport appliance according to either of Claims 1 and 2, **characterized in that** the displacement means (22) are able to be put out of service in a transporting position such that a transported material (50) is locked on the transport appliance (1) during a transporting operation.

4. Transport device having a transport appliance (1) according to one of Claims 1 to 3, further comprising a displaceable transport roller (5) which, in order to receive the transported material (50), has a loading surface (51), said loading surface (51) having a cutout through which the support member (20) of the transport appliance (1) can receive the loaded material (50).

## Revendications

1. Appareil de transport (1) comprenant un bogie (10) avec un châssis (11) pour le déplacement de l'appareil de transport (1) sur une base (100), en particulier un sol, et un organe de support relevable et abaissable (20), dans lequel il est prévu des moyens de déplacement (22) disposés sur l'organe de support (20) pour le déplacement d'un produit à transporter (50) déposé sur l'organe de support (20) et l'organe de support (20) est relevable et abaissable au moyen d'un dispositif de levage (30), **caractérisé en ce que** le dispositif de levage (30) est constitué par un mécanisme à levier, dans lequel le mécanisme à levier comprend un levier d'actionnement (31), qui est monté dans une première articulation (35) sur un manche de déplacement (40) assemblé rigidement au châssis (11), dans lequel une bielle (32) est montée dans une deuxième articulation (36) sur une extrémité inférieure du levier d'actionnement (31), dans lequel la bielle (32) est supportée contre le châssis (11), à son extrémité opposée au levier d'actionnement (31), avec un corps d'organe de support (21) au moyen de deux fois deux barres de levier (33) articulées aussi bien sur l'organe de transport (20) dans une quatrième articulation (38) que sur le châssis (11) dans une cinquième articulation (39), dans lequel chaque fois deux barres de levier (33) sont disposées sur chaque côté du corps d'organe de transport (21).

2. Appareil de transport selon la revendication 1, **caractérisé en ce qu'**une butée (14) est assemblée au châssis (11), et forme un arrêt pour les barres de levier (33), sur lequel les barres de levier (33) viennent buter lors de l'actionnement du levier d'actionnement (31).

3. Appareil de transport selon l'une des revendications 1 ou 2, **caractérisé en ce que** les moyens de déplacement (22) peuvent être mis hors service dans une position de transport, de telle manière qu'un produit à transporter (50) soit bloqué sur l'appareil de transport (1) pendant une opération de transport.

4. Dispositif de transport avec un appareil de transport (1) selon l'une quelconque des revendications 1 à 3, comprenant en outre un chariot de transport déplaçable (5), qui présente un plateau de chargement (51) destiné à recevoir le produit à transporter (50), ce plateau de chargement (51) présentant un évidement, à travers lequel l'organe de support (20) de l'appareil de transport (1) peut recevoir le produit à transporter (50).
